# EUROPEAN PATENT APPLICATION

(11) **EP 4 583 556 A1**
(43) Date of publication of application: **09.07.2025**
(21) Application number: 24305022.6
(22) Date of filing: 08.01.2024
(51) Int. Cl.: H04W 12/02, H04W 12/041, H04W 12/72

(54) **SUCI KEY PAIR DERIVATION PER LOCAL 5G STANDALONE NETWORK**

(71) Applicant: THALES DIS FRANCE SAS, 92190 Meudon (FR)
(72) Inventor: DANY, Vincent, 13400 Aubagne (FR); VIGILANT, David, 92240 Malakoff (FR); PAULIAC, Mireille, 13470 Carnoux En Provence (FR)
(74) Representative: Castelo, Jérôme

(57) **Abstract**

The present invention relates to a method to perform registration based on a specified registration procedure using a SUCI key pair to conceal and deconceal the SUPI of a 5G or above compliant user equipment to a local standalone network hosting a local Unified Data Management, said user equipment storing a Subscriber Permanent Identifier SUPI. Said method proposes to pre-provision the user equipment with a secret SUCI master key SUCI_MK and public key of a master SUCI key pair and the local Unified Data Management with a local private key derived using the secret SUCI master key SUCI_MK, the private key of the and a value nSUCI associated to the local standalone network. The user equipment then determines a value nSUCI from the connection context within the local standalone network, derives a local public key using the secret SUCI master key SUCI_MK, the public key of the master SUCI key pair and the determined value nSUCI, conceal the SUPI using the derived local public key to obtain a Subscriber Concealed Identifier SUCI and perform the registration using the Subscriber Concealed Identifier SUCI at the local Unified Data Management which uses the provisioned derived local private key to perform the de-concealment of the SUPI and the registration of the user equipment.

## Description

### FIELD OF THE INVENTION

The present invention relates to a method to perform registration of a 5G or above compliant user equipment to a local 5G standalone network hosting a local Unified Data Management, said user equipment storing a Subscriber Permanent Identifier SUPI, said method being based on a specified registration procedure using a SUCI key pair to conceal and deconceal the SUPI. The specified registration procedure in the meaning of the invention is part of an already settled standardized document or of a standardized that will be settled in the future. For example TS 23.502 specifies such a registration procedure.

The invention also relates to a user equipment and a local Unified Data Management UDM implementing the method of the invention.

### BACKGROUND OF THE INVENTION

The invention concerns local 5G standalone network corresponding to an evolution of Isolated E-UTRAN Operation for Public Safety or IOPS in 5G. IOPS (Isolated Operation for Public Safety) was defined by 3GPP for E-UTRAN in order to propose public safety oriented services. IOPS was introduced in 4G with the definition of local Evolved Packet Core EPC network. Those IOPS local networks are considered as tactical bubbles.

More generally, IOPS aims at maintaining a level of communication between public safety users, offering them local mission-critical services even when the backhaul connectivity to the core network is not fully functional, typically when there is no coverage in the area, or when the infrastructure is damaged.

For IOPS with LTE (4G), 3GPP defined the derivation of local key for the authentication of the subscriber/user within the local EPC network. The derivation of a local key is per local network. This derivation ensures that, in case of loss of local network, there would be no security impact on the other local networks, i.e. on other tactical bubbles. Such a loss occurs for example when a local network/tactical bubble deployed in a truck is stolen.

In 5G, 3GPP introduced the Subscription Concealed Identifier SUCI in order to protect subscriber privacy. The SUCI contains the concealed Subscription Permanent Identifier SUPI, equivalent to the IMSI in legacy.

The protection in privacy of the SUPI relies on a home network key pair. The home network public key is stored in the USIM of the subscriber to perform the concealment of the SUPI, while the home network private key is stored by the home network to perform the de-concealment of the SUPI from the SUCI.

However, 3GPP has not yet changed IOPS specifications to take into account the introduction of SUCI in 5G.

Consequently, one single home network key pair would have to be used for several IOPS local 5G networks to protect the SUPI in privacy. If an attacker retrieves the home network private key from a compromised local network, the attacker can retrieve the SUPI of subscribers communicating in all the other local networks that use the same home network private key to de-conceal the SUPI of subscribers. This would result in serious privacy attack. This major flaw must be resolved to secure the deployment of local networks.

Further alternative and advantageous solutions would, accordingly, be desirable in the art.

### SUMMARY OF THE INVENTION

The present invention aims at avoiding, or at least making more difficult the above-mentioned malicious attacks.

The present invention is defined, in its broadest sense, as a method to perform registration of a 5G or above compliant user equipment to a local standalone network hosting a local Unified Data Management, said user equipment storing a Subscriber Permanent Identifier SUPI, said method being based on a specified registration procedure using a SUCI key pair to conceal and deconceal the SUPI, said method comprising the steps of:
- pre-provisioning the user equipment with a secret SUCI master key SUCI_MK and public key of a master SUCI key pair;
- for a macro Unified Data Management storing the secret SUCI master key SUCI_MK and private key of the master SUCI key pair, preliminarily deriving per local standalone network a local private key using the secret SUCI master key SUCI_MK, the private key of the master SUCI key pair and a value nSUCI associated to the local standalone network;
- for the macro Unified Data Management, preliminarily provisioning the local Unified Data Management with the derived local private key;
- for the user equipment, determining a value nSUCI from the connection context within the local standalone network,
- for the user equipment, deriving a local public key using the secret SUCI master key SUCI_MK, the public key of the master SUCI key pair and the determined value nSUCI,
- for the user equipment, concealing the SUPI using the derived local public key to obtain a Subscriber Concealed Identifier SUCI;
- for the user equipment, performing the registration;
- for the local Unified Data Management, using the provisioned derived local private key to perform the de-concealment of the SUPI and the registration of the user equipment.

The invention defines a local SUCI key pair per local 5G standalone network in order to guarantee that the loss of an IOPS local network, for example in case of stolen tactical bubble, has no security impact on the privacy of the subscribers in other local 5G standalone networks. IOPS security is enhanced for 5G in order to take into account 5G SUCI. 5G IOPS USIM can thus be 1. to perform registration of a 5G or above compliant user equipment to a local 5G standalone network hosting a local Unified Data Management, said user equipment storing a Subscriber Permanent Identifier SUPI, said method being based on a specified registration procedure using a SUCI key pair to conceal and deconceal the SUPI, said method comprising the steps of:
- pre-provisioning the user equipment with a secret SUCI master key SUCI_MK and public key of a master SUCI key pair;
- for a macro Unified Data Management storing the secret SUCI master key SUCI_MK and private key of the master SUCI key pair, preliminarily deriving per local standalone network a local private key using the secret SUCI master key SUCI_MK, the private key of the master SUCI key pair and a value nSUCI associated to the local standalone network;
- for the macro Unified Data Management, preliminarily provisioning the local Unified Data Management with the derived local private key;
- for the user equipment, determining a value nSUCI from the connection context within the local standalone network,
- for the user equipment, deriving a local public key using the secret SUCI master key SUCI_MK, the public key of the master SUCI key pair and the determined value nSUCI,
- for the user equipment, concealing the SUPI using the derived local public key to obtain a Subscriber Concealed Identifier SUCI;
- for the user equipment, performing the registration;
- for the local Unified Data Management, using the provisioned derived local private key to perform the de-concealment of the SUPI and the registration of the user equipment.

The invention requires data to be configured in the USIM and in the local network for SUCI calculation or de-concealment and a modified data signaling. Therefore, the method according to the present invention allows to mitigate malicious attacks. At least, the attacks are more complex to carry out for a malicious attacker.

According to an advantageous feature, the derivation steps further use a function f(nSUCI) of the value nSUCI.

This feature enables the derivation to be modified by update of the function. This is specifically interesting when there is a need to diversify the derivation during operation. It becomes possible, by only changing the function, to increase entropy of the method of the invention. In practice, when there is doubt that a local Unified Data Management is spied, the invention thus offers the possibility to update the functioning of the local Authentication credential Repository and Processing Function ARPF part of Unified Data Management UDM while not having to interrupt the operations. There is however a need to provision an update of the function in parallel for each user equipment intended to operate with the concerned local Unified Data Management.

According to a first embodiment of the invention, the user equipment having a secure component storing the SUPI and being pre-provisioned with the secret SUCI master key SUCI_MK and the public key of the master SUCI key pair, the method comprises the steps, for the user equipment:
- gathering data related to the connection context within the local 5G standalone network;
- sending gathered data to the secure component;
said method further comprising, for the secure component, the steps of:
- determining the value nSUCI for the local 5G standalone network on the basis of the gathered data;
- deriving a local public key using the secret SUCI master key SUCI_MK, the public key of the master SUCI key pair and the determined value nSUCI,
- performing the concealment of the SUPI using the derived local public key to obtain a Subscriber Concealed Identifier SUCI.

This first embodiment enables to protect the calculation of the SUCI in the secure component of the user equipment.

In an advantageous implementation, a get identity command sent by the user equipment to the secure component being used in the registration procedure, a specific context for IOPS is introduced in the Get Identity command and the user equipment inputs data in the specific context for the secure component to deduce the nSUCI.

The use of such a command which is already used in the prior art is advantageous as not requiring substantial modification of the existing protocol between the user equipment and its secure component.

According to a second embodiment, the user equipment having a secure component being pre-provisioned with the secret SUCI master key SUCI_MK and the public key of the master SUCI key pair, the method comprises the steps, for the user equipment storing the SUPI:
- gathering data related to the connection context within the local 5G standalone network;
- sending gathered data to the secure component;

said method further comprising, for the secure component, the steps of:
   - determining the value nSUCI for the local 5G standalone network on the basis of the gathered data;
   - deriving a local public key using the secret SUCI master key SUCI_MK, the public key of the master SUCI key pair and the determined value nSUCI,
sending the local public key to the user equipment for the user equipment to perform the concealment of the SUPI using the derived local public key to obtain a Subscriber Concealed Identifier SUCI.

This embodiment relies on the user equipment itself to perform the calculation of the SUCI. It corresponds to situations where the Permanent Subscriber Identifier is not strongly protected via the use of a secure component.

According to a specific feature of the invention, the value nSUCI being introduced by the user equipment as part of the gathered data, the determination of the value nSUCI by the secure component is an extraction of the value nSUCI from the gathered data.

With this feature, this is the user equipment which deduces the value nSUCI from the connection context and which introduces the value nSUCI directly in the gathered data which enable the secure component to determine the key to be used for the concealment of the SUPI.

The present invention also relates to a 5G or above compliant user equipment storing a Subscriber Permanent Identifier SUPI and configured to register to a local standalone network hosting a local Unified Data Management using a specified registration procedure using a SUCI key pair to conceal and deconceal the SUPI and having being preliminary provisioned with a local private key derived using a secret SUCI master key SUCI_MK, a private key of a master SUCI key pair and a value nSUCI associated to the local standalone network, said user equipment being pre-provisioning with the secret SUCI master key SUCI_MK and public key of the master SUCI key pair, said user equipment being configured to determine a value nSUCI from a connection context within a local standalone network, to derive a local public key using the secret SUCI master key SUCI_MK, the public key of the master SUCI key pair and the determined value nSUCI, to conceal the SUPI using the derived local public key to obtain a Subscriber Concealed Identifier SUCI and to perform the registration at the local Unified Data Management using the Subscriber Concealed Identifier SUCI.

The above-mentioned embodiments when implemented in such a user equipment are also part of the invention.

The invention at last relates to a Local Unified Data Management operating in a local standalone network and configured to register, using a specified registration procedure using a SUCI key pair to conceal and deconceal the SUPI, a 5G or above compliant user equipment, said user equipment storing a Subscriber Permanent Identifier SUPI and being pre-provisioned with a secret SUCI master key SUCI_MK and with public key of a master SUCI key pair,
said local Unified Data Management being preliminary provisioned by a macro Unified Data Management storing the secret SUCI master key SUCI_MK and private key of the master SUCI key pair, with a local private key derived using the secret SUCI master key SUCI_MK, private key of the master SUCI key pair and a value nSUCI associated to the local standalone network;
said local Unified Data Management being configured to register the user equipment having sent a Subscriber Concealed Identifier SUCI using the provisioned derived local private key to perform the de-concealment of the SUPI and the registration of the user equipment.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 illustrates the provisioning of keys according to the invention in a local LUDM_nSUCI of the invention;
- Figure 2 illustrates the concealed identifier generation according to the invention;
- Figure 3 illustrates the registration of a User Equipment of the invention.

### DETAILED DESCRIPTION OF EMBODIMENTS OF THE INVENTION

For a more complete understanding of the invention, the invention will now be described in detail with reference to the accompanying drawing. The detailed description will illustrate and describe what is considered as a preferred embodiment of the invention. It should of course be understood that various modifications and changes in form or detail could readily be made without departing from the scope of the invention. It is therefore intended that the invention may not be limited to the exact form and detail shown and described herein, nor to anything less than the whole of the invention disclosed herein and as claimed hereinafter. The same elements have been designated with the same references in the different drawings. For clarity, only those elements and steps which are useful to the understanding of the present invention have been shown in the drawings and will be described.

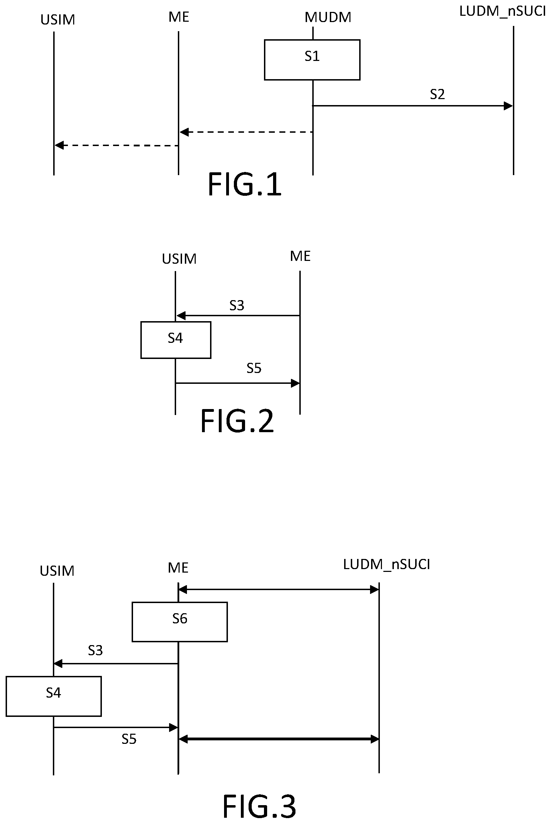

Figure 1 illustrates the provisioning of keys according to the invention in a local Unified Data Management/Authentication credential Repository and Processing Function LUDM_nSUCI of the invention.

For the need of the invention, a macro Unified Data Management, generally coupled with a Subscription Identifier De-concealing Function and an Authentication credential Repository and Processing Function MUDM has, as a prerequisite, a master SUCI key pair (dM, QM) and a SUCI master secret key SUCI_MK. The SUCI master secret key SUCI_MK will be used to derive local SUCI key pair used to calculate the SUCI as besides already known. The SUCI master secret key SUCI_MK shall have appropriate entropy to keep dM safe even if several private keys dnSUCI of several local UDM are stolen. For the need of the invention, the macro Unified Data Management MUDM also stores local UDM identifiers, referenced as nSUCI, and an associated function f(nSUCI) per local LUDM_nSUCI.

Thus the value nSUCI identifies the local network having the Unified Data Management LUDM_nSUCI to define the local SUCI key pair.

According to the invention, nSUCI is advantageously determined by associated Tracking Area Code TAC and/or NR Cell Global Identity NCGI (Mobile Country Codes MCC | Mobile Network Codes MNC | gNB ID | Cell ID), in whole or in part, used directly or via a mapping table. A TAC value only may be used in the case where local networks are small enough to correspond to one single TAC and where local networks are synchronized in such a way that two distinct networks do not use a same TAC.

In a first step S1, the Macro Unified Data Management MUDM derives a local private key dnSUCI of a local key pair per local Unified Data Management LUDM_nSUCI. Typically the computation of the local private key is as follows:
dnSUCI = KDF(SUCI_MK|nSUCI|f(nSUCI)) x dM mod N with N as a curve order. KDF stands here for a cryptographic key derivation function, based on a strong pseudorandom function. A KDF could be for example a pseudorandom function based on a hash function a.k.a HKDF (RFC5869). It is further noted here that the value 0 mod N must be avoided to make the derived key dnSUCI functional even if it has very few chance to happen given the size of KDF output. This is easily avoided by making the MUDM assigning a new nSUCI if ever this happens. An iterative construction can also be contemplated if this happens for example by concatenating a counter and recomputing KDF with an incremented counter while dnSUCI is equal to zero.

The derivation of the local private key thus uses the secret SUCI master key SUCI_MK, the master private key of the master key pair dM and the value nSUCI related to the local 5G standalone network.

In a step S2, the macro UDM MUDM provisions local LUDM_nSUCI with the corresponding private key dnSUCI. Each local LUDM_nSUCI is thus identified with an identifier "nSUCI" and it stores the private SUCI key dnSUCI.

Figure 2 illustrates the mechanism of local key derivation for SUCI per local network according to the invention. To enable this key derivation, a secure component USIM in a user equipment UE intended to be connected using a local UDM of the invention is advantageously previously provisioned with necessary parameters for the implementation of the invention. This provisioning is done during personalization phase or using Over-The-Air OTA provisioning. Typically this provisioning is performed by involving the macro Unified Data Management MUDM preliminary to any registration of the user equipment ME to a local 5G standalone network with a local Unified Data Management LUDM_nSUCI.

The secure component is thus provisioned not only with a SUPI assigned for local 5G network, but also with the secret SUCI master key SUCI_MK and with the public key QM of the master SUCI key pair.

For the purpose of the invention, in a step S3, the mobile equipment ME then sends to the secure component USIM a command, typically a get identity cmd, comprising a specific context providing sufficient information relative to local 5G network identifier nSUCI as parameter.

The Get Identity command is the actual command used by the mobile to request a SUCI from the USIM. In this command, there is a context parameter that allows the card to adapt the SUCI calculation. Today, there are two possible contexts, one called "SUCI", which is the basic case, and another called "SUCI NSWO", because in a Non-seamless WLAN Offload NSWO case, the card must generate the SUCI differently.

According to an advantageous embodiment, the invention introduces a third specific context for IOPS in the Get Identity command as besides defined in the standard, where the user equipment, typically a cell phone, inputs data for the secure component to deduce the nSUCI.

According to another embodiment, the SUCI being generated by the mobile equipment ME, the secure component returns only the derived public key to the ME. In this case a new command is introduced according to the invention to get the derived public key.

The reception of the specific context triggers, at the USIM side, a step S4 of derivation of QnSUCI using the master public key QM, the master secret key SUCI_MK and the value nSUCI using the function KDF also used by the macro Unified Data Management MUDM.

As above mentioned, a function f(nSUCI) is advantageously used as input parameter for the KDF. The computation is thus advantageously as follows:
QnSUCI = KDF(SUCI_MK|nSUCI|f(nSUCI)).QM, where '.' denotes in this formula the Elliptic curve point multiplication.

This local public key QnSUCI then takes the role of home network public key for SUCI concealment as besides defined in standardized specification for the registration mechanism.

In a step S5, the secure component USIM either returns the SUCI if USIM is configured to generate the SUCI by itself or returns the derived public key QnSUCI to the ME if USIM is configured to have the SUCI generated by the ME.

Figure 3 illustrates the registration of the user equipment UE to a local 5G standalone network with a local Unified Data Management LUDM_nSUCI with which the mobile equipment ME is connected as illustrated by a double arrow. Registration procedure as already defined in 5G specifications and in other specification to come can benefit from the invention.

The invention proposes derivation of both the secret SUCI master key SUCI_MK and the master SUCI key pair to conceal the SUPI in function of a value nSUCI associated to the local network LUDM_nSUCI.

Thus, as shown on figure 3, in a step S6, the ME extracts the specific context providing sufficient information relative to local 5G network identifier nSUCI as parameter from its connection with the local network LUDM_n. This extraction is based on associated Tracking Area Code TAC and/or NR Cell Global Identity NCGI, in whole or in part, used directly or via a mapping table. The value nSUCI is thus determined.

Then in a step S3, the ME sends a command to the secure component USIM as also described in figure 2. According to the invention, the command comprises the value nSUCI of the local LUDM_nSUCI or all necessary parameters for the secure component USIM to determine its value.

Thanks to the process as shown on figure 2, the secure component USIM is compliant with an operation with a local Unified Data Management LUDM_nSUCI, i.e. is compliant with IOPS operation. Specifically, the secure component USIM knows a PLMN identity assigned for IOPS, the SUPI assigned for IOPS and the SUCI master secret key SUCI_MK. It also has access to table for f(nSUCI) to be used for the derivation mechanism when needed. This is the interest of the invention to precisely enable this table to be updated, typically via Over-The-Air provisioning in case of stolen local Unified Data Management LUDM_nSUCI. The invention not only provides a diversification of the sets of keys used by each of the local network but also enables to update the sets of keys to be used by a same operating local network when there is suspicion of spying and/or forging.

In a step S4, the secure component USIM makes as described in figure 2. In a step S5, necessary cryptographic material is sent to the ME to be used in the pursuit of the registration procedure with the local Unified Data Management illustrated by a large double arrow on figure 3. Such a registration procedure is one as described in standardized registration process already defined or to come and is thus not detailed here. The invention concerns all registration process where a concealed SUPI is used.

A strong advantage of the invention is the possibility to update table in the USIM with OTA if one local UDM/ARPF has been compromised. The function f(n_{SUCI}) allows to recover the tactical bubble « nSUCI » when there is suspicion that this tactical bubble « nSUCI » has been compromised.

In the above detailed description, reference is made to the accompanying drawings that show, by way of illustration, specific embodiments in which the invention may be practiced. These embodiments are described in sufficient detail to enable those skilled in the art to practice the invention. The above detailed description is, therefore, not to be taken in a limiting sense, and the scope of the present invention is defined only by the appended claims, appropriately interpreted.

## Claims

1. Method to perform registration of a 5G or above compliant user equipment to a local standalone network hosting a local Unified Data Management, said user equipment storing a Subscriber Permanent Identifier SUPI, said method being based on a specified registration procedure using a SUCI key pair to conceal and deconceal the SUPI, said method comprising the steps of:
- pre-provisioning the user equipment with a secret SUCI master key SUCI_MK and public key of a master SUCI key pair;
- for a macro Unified Data Management storing the secret SUCI master key SUCI_MK and private key of the master SUCI key pair, preliminarily deriving per local standalone network a local private key using the secret SUCI master key SUCI_MK, the private key of the master SUCI key pair and a value nSUCI associated to the local standalone network;
- for the macro Unified Data Management, preliminarily provisioning the local Unified Data Management with the derived local private key;
- for the user equipment, determining a value nSUCI from the connection context within the local standalone network,
- for the user equipment, deriving a local public key using the secret SUCI master key SUCI_MK, the public key of the master SUCI key pair and the determined value nSUCI,
- for the user equipment, concealing the SUPI using the derived local public key to obtain a Subscriber Concealed Identifier SUCI;
- for the user equipment, performing the registration to the local 5G standalone network hosting the local Unified Data Management using the Subscriber Concealed Identifier SUCI;
- for the local Unified Data Management, using the provisioned derived local private key to perform the de-concealment of the SUPI and the registration of the user equipment.

2. Method according to claim 1, wherein the derivation steps further use a function f(nSUCI) of the value nSUCI.

3. Method according to one of claims 1 and 2, wherein, the user equipment having a secure component storing the SUPI and being pre-provisioned with the secret SUCI master key SUCI_MK and the public key of the master SUCI key pair, the method comprises the steps, for the user equipment:
- gathering data related to the connection context within the local 5G standalone network;
- sending gathered data to the secure component;
said method further comprising, for the secure component, the steps of:
- determining the value nSUCI for the local 5G standalone network on the basis of the gathered data;
- deriving a local public key using the secret SUCI master key SUCI_MK, the public key of the master SUCI key pair and the determined value nSUCI,
- performing the concealment of the SUPI using the derived local public key to obtain a Subscriber Concealed Identifier SUCI.

4. Method according to claim 3, wherein, a get identity command sent by the user equipment to the secure component being used in the registration procedure, a specific context for IOPS is introduced in the Get Identity command and the user equipment inputs data in the specific context for the secure component to determine the nSUCI.

5. Method according to one of claims 1 and 2, wherein, the user equipment having a secure component being pre-provisioned with the secret SUCI master key SUCI_MK and the public key of the master SUCI key pair, the method comprises the steps, for the user equipment storing the SUPI:
- gathering data related to the connection context within the local 5G standalone network;
- sending gathered data to the secure component;
said method further comprising, for the secure component, the steps of:
- determining the value nSUCI for the local 5G standalone network on the basis of the gathered data;
- deriving a local public key using the secret SUCI master key SUCI_MK, the public key of the master SUCI key pair and the determined value nSUCI,
- sending the local public key to the user equipment for the user equipment to perform the concealment of the SUPI using the derived local public key to obtain a Subscriber Concealed Identifier SUCI.

6. Method according to one of claims 3 to 5, wherein the value nSUCI being introduced by the user equipment as part of the gathered data, the determination of the value nSUCI by the secure component is an extraction of the value nSUCI from the gathered data.

7. 5G or above compliant user equipment storing a Subscriber Permanent Identifier SUPI and configured to register to a local standalone network hosting a local Unified Data Management using a specified registration procedure using a SUCI key pair to conceal and deconceal the SUPI and having being preliminary provisioned with a local private key derived using a secret SUCI master key SUCI_MK, a private key of a master SUCI key pair and a value nSUCI associated to the local standalone network, said user equipment being pre-provisioning with the secret SUCI master key SUCI_MK and public key of the master SUCI key pair, said user equipment being configured to determine a value nSUCI from a connection context within a local standalone network, to derive a local public key using the secret SUCI master key SUCI_MK, the public key of the master SUCI key pair and the determined value nSUCI, to conceal the SUPI using the derived local public key to obtain a Subscriber Concealed Identifier SUCI and to perform the registration at the local Unified Data Management using the Subscriber Concealed Identifier SUCI.

8. 5G or above compliant user equipment according to claim 7 and further having a secure component storing the SUPI and being pre-provisioned with the secret SUCI master key SUCI_MK and the public key of the master SUCI key pair, said user equipment being configured to gather data related to the connection context within the local 5G standalone network, send gathered data to the secure component for the secure component to determine the value nSUCI for the local 5G standalone network on the basis of the gathered data, derive a local public key using the secret SUCI master key SUCI_MK, the public key of the master SUCI key pair and the determined value nSUCI and to perform the concealment of the SUPI using the derived local pub. lic key to obtain a Subscriber Concealed Identifier SUCI for it to be used in the registration at the local Unified Data Management.

9. 5G or above compliant user equipment according to claim 8 using a get identity command sent to the secure component in the registration procedure, said get identity command comprising a specific context for IOPS where the user equipment is configured to input data for the secure component to determine the nSUCI.

10. 5G or above compliant user equipment according to claim 7 storing the SUPI and further having a secure component pre-provisioned with the secret SUCI master key SUCI_MK and the public key of the master SUCI key pair, said user equipment being configured to gather data related to the connection context within the local 5G standalone network, send gathered data to the secure component, for it to determine the value nSUCI for the local 5G standalone network on the basis of the gathered data, to derive a local public key using the secret SUCI master key SUCI_MK, the public key of the master SUCI key pair and the determined value nSUCI and to send the local public key to the user equipment for the user equipment to perform the concealment of the SUPI using the derived local public key to obtain a Subscriber Concealed Identifier SUCI.

11. 5G or above compliant user equipment according to one of claims 8 to 10, said user equipment being configured to introduce the value nSUCI as part of the gathered data, the determination of the value nSUCI by the secure component is an extraction of the value nSUCI from the gathered data.

12. Local Unified Data Management operating in a local standalone network and configured to register, using a specified registration procedure using a SUCI key pair to conceal and deconceal the SUPI, a 5G or above compliant user equipment, said user equipment storing a Subscriber Permanent Identifier SUPI and being pre-provisioned with a secret SUCI master key SUCI_MK and with public key of a master SUCI key pair,
said local Unified Data Management being preliminary provisioned by a macro Unified Data Management storing the secret SUCI master key SUCI_MK and private key of the master SUCI key pair, with a local private key derived using the secret SUCI master key SUCI_MK, private key of the master SUCI key pair and a value nSUCI associated to the local standalone network;
said local Unified Data Management being configured to register the user equipment having sent a Subscriber Concealed Identifier SUCI using the provisioned derived local private key to perform the de-concealment of the SUPI and the registration of the user equipment.
